# EUROPÄISCHE PATENTSCHRIFT

(11) **EP 0 730 540 B1**
(45) Veröffentlichungstag und Bekanntmachung des Hinweises auf die Patenterteilung: **01.08.2001**
(21) Anmeldenummer: 95935876.3
(22) Anmeldetag: 23.09.1995
(51) Int. Cl.: B61D 17/04, B61D 25/00, B61D 17/08

(54) **SCHIENENGEBUNDENER TRIEBWAGEN**
TRACK-BOUND POWER CAR
VEHICULE AUTOMOTEUR ROULANT SUR RAILS

(30) Priorität: 30.09.1994 DE 9415771 U
(43) Veröffentlichungstag der Anmeldung: 11.09.1996
(73) Patentinhaber: DaimlerChrysler AG, 70546 Stuttgart (DE)
(72) Erfinder: TEGELER, Ferdinand, D-13587 Berlin (DE)
(74) Vertreter: Luderschmidt, Schüler & Partner GbR
(86) Internationale Anmeldenummer: EP9503777
(87) Internationale Veröffentlichungsnummer: WO9610509

(56) Entgegenhaltungen:
- DE-U- 9 306 853
- US-A- 2 519 018
- RAILWAY GAZETTE INTERNATIONAL, Bd. 147, Nr. 8, August 1991 SUTTON, SURREY, GB, Seite 509 XP 000216527

## Beschreibung

Die Erfindung betrifft einen schienengebundenen Triebwagen für die Personenbeförderung gemäß dem Oberbegriff des Anspruchs 1.

Schienengebundene Triebwagen für die Personenbeförderung sind an sich schon lange allgemein bekannt und werden häufig auf Bahnstrecken im Personennahverkehr eingesetzt. Entsprechend den hohen mechanischen Beanspruchungen sind die bekannten Triebwagen dementsprechend festigkeitsmäßig ausgelegt und gestaltet, was sich allerdings nachteilig auf deren Gewicht und hieraus resultierend auf deren Betriebsstoffverbrauch auswirkt.

Aus dem Dokument DE-U-93 06 853 ist ein Triebwagen für die Personenbeförderung der eben genannten Art bekannt. Der Mittelbereich des Wagenkastens ist erhöht gegenüber den Kopfstücken ausgestaltet. Somit sind an den Kopfstücken angeordnete Türen gegenüber dem Wagenkastenboden zwar abgesenkt. Jedoch müssen die Fahrgäste, um auf das Wagenkastenbodenniveau zu gelangen, Stufen überwinden. Dies erschwert den Zugang zu dem Wagenkasten für die Fahrgäste erheblich.

Ausgehend von diesem Stand der Technik ist es die Aufgabe der Erfindung, einen Triebwagen der eingangs genannten Art zu schaffen, bei dem die Fahrgäste keine Stufen überwinden müssen und somit eine möglichst bequeme Personenbeförderung gewährleistet ist, und dessen Gestaltung gleichzeitig im Sinne einer Gewichtsersparnis optimiert ist, ohne daß hieraus Nachteile für den Triebwagen aufgrund der mechanischen Beanspruchungen resultieren, die auf Einwirkungen von außen zurückzuführen sind.

Zur Lösung dieser Aufgabe dienen erfindungsgemäß die kennzeichnenden Merkmale des Anspruches 1. Demgemäß ist der Wagenkasten trogartig ausgebildet und besteht aus einem Wagenkastenboden mit daran seitlich anschließenden, aus Seitenwandsäulen, unteren Langträgern sowie oberen Längsgurten gebildeten Seitenwänden in Fachwerkbauweise. Hierbei stützen sich die oberen Längsgurte über horizontale Verbindungsträger gegenseitig ab. Wesentlich für die erfindungsgemäße Konstruktion des Triebwagens ist das aus schräg angestellten Trägern bzw. Seitenwandsäulen gebildete Fachwerk, bei welchem auf die üblicherweise vorgesehenen vertikalen Träger verzichtet werden kann. Mit dieser Gestaltung ist es möglich, die Träger bzw. Seitenwandsäulen frei von Biegemomenten zu halten und nur mit Zug- bzw. Druckkräften zu beanspruchen.

Unabhängig von diesen vom Fachwerk aufzunehmenden Lasten sind die Einstiegsbereiche von senkrechten Rahmen eingefaßt, in welchen die Türen geführt sind.

Entsprechend einer bevorzugten Ausführungsform der Erfindung ist der Wagenkastenboden von einem Wellblechboden mit Querträgern gebildet, der die Kräfte aus der Nutzlast aufnimmt und in die Seitenwände sowie in
die unteren Längsträger ableitet. Die Seitenwandsäulen dienen dabei als Tragelemente für daran befestigte Fenster sowie Seitenverkleidungselemente.

Hierbei erweist es sich als besonders vorteilhaft, daß die Seitenwandsäulen zickzackartig angeordnet sind und mit den unteren Langträgern und den oberen Längsgurten verbunden sind. Hierdurch wird eine optimale Krafteinleitung und - übertragung gewährleistet, da sowohl horizontale als auch vertikale Lasten bei dieser Gestaltung in ausreichendem Maße von den Seitenwandsäulen aufgenommen werden und auf die Langträger bzw. Längsgurte übertragen werden.

Nach einer weiteren bevorzugten Ausgestaltung der Erfindung sind die Seitenwandsäulen unter einem Winkel von 60° ± 10° an ihren Enden zueinander schräg gestellt, wobei ihre Enden an dem Langträger bzw. dem Längsgurt dicht beieinander oder gar überlappend angeordnet sind.

Diese zickzackartige Fachwerkbauweise der Seitenwandsäulen wird lediglich in den Einstiegsbereichen durch vertikal angeordnete Türsäulen unterbrochen, wobei die Türsäulen vorzugsweise aus verstärkten Profilen gefertigt sind, um so eine angreifende Querkraft abtragen zu können. Dabei sind die Türsäulen, welche jeweils eine von Türen verschließbare Einstiegsöffnung einfassen, ebenfalls mit den unteren Langträgern und den oberen Längsgurten biegesteif verbunden.

Entsprechend dem zugrundeliegenden Konzept ist der erfindungsgemäße Triebwagen in Niederflurbauweise ausgeführt, wobei der Wagenkasten einen tiefliegenden Niederflurbereich aufweist, in welchem auch die Einstiegsbereiche angeordnet sind, und in jeweils beidendig anschließende Kopfstücke, deren Bodenniveau gegenüber dem Niederflurbereich erhöht ist. Der Niederflurbereich umfaßt wenigstens 60 % der Nutzfläche des Wagenkastens.

Die an den Seitenwandsäulen befestigten Fenster bzw. Seitenwandelemente sind vorzugsweise daran angeklebt, wobei zusätzliche Brüstungsgurte vorgesehen sind, welche als horizontale Anlagefläche sowohl für die Fenster als auch für die Seitenwandelemente dienen. Die Brüstungsgurte sind an der Kraftübertragung nicht beteiligt und können daher relativ einfach mittels Klemm- und/oder Schraubverbindung an den Seitenwandsäulen bzw. Türsäulen befestigt sein.

Die durch die Fachwerkbauweise erzielte Gewichtsminderung kann gegenüber der heute allgemein üblichen Vollwandbauweise bis zu 25 % betragen, wobei aufgrund der Verwendung von Sandwich-Bauteilen für die Seitenwandelemente zusätzlich eine um 50 % gegenüber dem heutigen Stand verbesserte Wärmedämmung erreicht werden kann. Hieraus ist klar erkennbar, daß mit der erfindungsgemäßen Ausgestaltung eines Triebwagens der Energiebedarf erheblich erheblich gesenkt werden kann. Ferner sind auch die Unterhaltungskosten für den Betrieb eines derartigen Triebwagens niedriger als für vergleichbare bekannte Fahrzeuge. Darüberhinaus ist mit der erfindungsgemäß vorgesehenen Konstruktion auch eine um wenigstens 10 % verbesserte Schalldämmung möglich.

Eine vorteilhafte, die Außenseitenwände betreffende Ausgestaltung der Erfindung zeichnet sich dadurch aus, daß hierfür Sandwich-Platten vorgesehen sind, die eine aus gewebeverstärktem Kunstharz, zum Beispiel GC-GFK2, gebildete Deckschicht und einen Kunststoffkern, vorzugsweise aus Divinycel H45 aufweist. Dabei hat der Kunststoffkern eine Dicke von etwa 15 mm, während die gesamte Sandwichplatte eine Gesamtdicke von 20 mm einhält. Zusätzlich kann auf der Außenseite des erfindungsgemäßen Triebwagens, das heißt an der Sandwichplatte, ein Blech, vorzugsweise aus Leichtmetall, angeordnet sein.

Eine alternative Ausgestaltung der zum Einsatz beim erfindungsgemäßen Triebwagen vorgesehenen Sandwichplatten weist einen zwischen zwei Holzplatten angeordneten Kunststoffkern auf, wobei auf dessen Außenseite ebenfalls ein Blech, zum Beispiel aus Leichtmetall, und auf der Innenseite eine Kunststoffplatte angeordnet sein kann.

Sämtliche tragenden Teile des Wagenkastens sind aus Stahlprofilen gefertigt, sei es aus 4-Kant-Stahlrohr oder aus Stahlblechabkantprofilen. Hierbei ist zwar prinzipiell ein höheres spezifisches Gewicht gegenüber einer Kontstruktion aus Leichtmetall zu verzeichnen, jedoch ist aufgrund des günstigeren E-Moduls eine höhere Steifigkeit bei geringeren Querschnitten und somit ein günstigeres Gewicht verbunden mit einer leichteren Handhabung bei der Fertigung gegeben.

Diese und weitere vorteilhafte Ausgestaltungen sind Gegenstand der Unteransprüche.

Anhand eines in der Zeichnung dargestellten Ausführungsbeispieles sollen die Erfindung, vorteilhafte Ausgestaltungen und besondere Vorteile näher erläutert und beschrieben werden.

Es zeigen:
- Fig. 1: einen einteiligen Triebwagen gemäß der Erfindung in Seitenansicht;
- Fig. 2: einen Wagenkasten gemäß der Erfindung im Rohzustand, wie er in dem Triebwagen gemäß Fig. 1 zum Einsatz kommt, in Seitenanspicht;
- Fig. 3: einen oberen Teilquerschnitt durch einen Triebwagen gemäß Fig. 1 (Übergang Seitenwand-Dach);
- Fig. 4: einen unteren Teilquerschnitt durch einen Triebwagen gemäß Fig. 1 (Übergang Seitenwand-Boden);

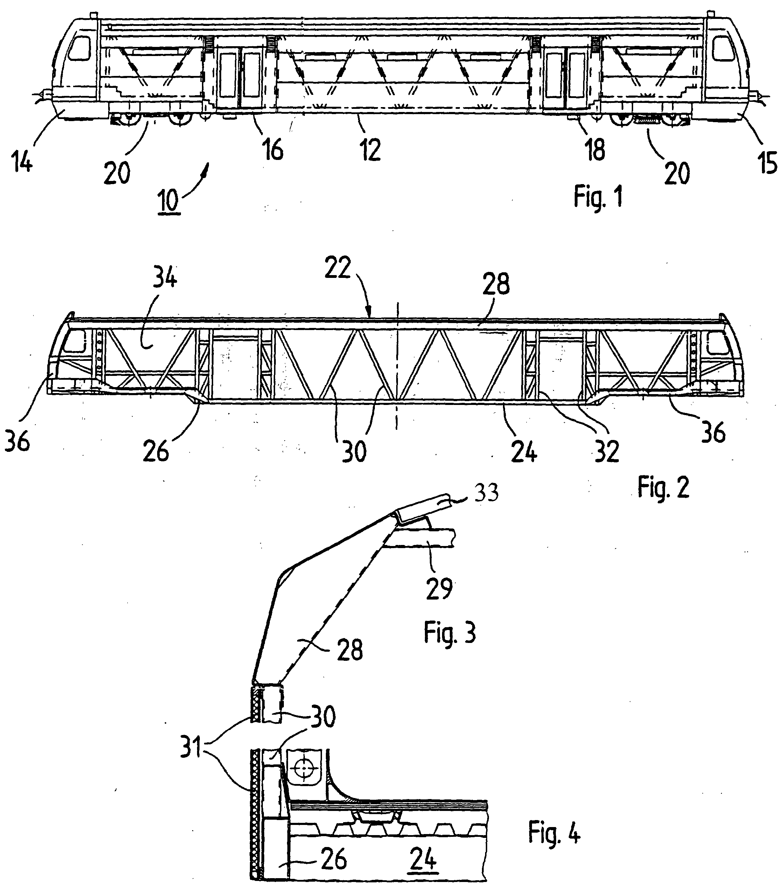

In Fig. 1 ist ein Triebwagen 10 dargestellt, der in Niederflurbauweise ausgebildet ist, wobei sein Niederflurbereich 12 mittig angeordnet ist und jeweils beidendig von Triebwagenköpfen 14, 15 eingefaßt ist. Der Niederflurbereich umfaßt etwa 2/3 der gesamten Nutzfläche des Triebwagens 10 und ist auf jeder Längsseite mit zwei Einstiegsbereichen 16, 18 versehen. Während die Triebwagenköpfe wegen dort untergebrachter Fahrwerke 20 und deren Antrieben einen erhöhten Bodenbereich aufweisen, wie insbesondere aus Fig. 2 ersichtlich ist, ist der Niederflurbereich 12 bodennah gestaltet, so daß problemlos das Ein- und Aussteigen der Fahrgäste möglich ist.

Der in Fig. 2 in Seitenansicht dargestellte Wagenkasten 22 ist in etwa trogartig ausgebildet, nämlich mit einem aus Wellblech mit Querträgern gebildeten Wagenkastenboden 24, der beiderseits von Langträgern 26 eingefaßt ist. Die Langträger 26 bilden gemeinsam mit jeweils einem oberen Längsgurt 28 und dazwischen angeordneten Seitenwandsäulen 30 bzw. Türsäulen 32 die Seitenwände 34 des trogartigen Wagenkastes 22.

Die Seitenwandsäulen 30 sind schräg zueinander angeordnet und schließen hierbei jeweils einen Winkel von etwa 60° zwischen sich ein. Die Enden der Seitenwandsäulen sind jeweils nebeneinander oder überlappend angeordnet und biegesteif mit dem unteren Langträger 26 bzw. dem oberen Längsgurt 28 verbunden. Weitere Versteifungen, insbesondere vertikale oder horizontale Versteifungen sind für die Kraftübertragung nicht vorgesehen und auch nicht erforderlich. Die Seitenwandsäulen 30 sind in Fig. 1 mittels gestrichelter Linie angedeutet, wobei im Bereich der Fenster diese Linien durchgezogen sind.

Lediglich in den Einstiegsbereichen 18 sind vertikal angeordnete Türsäulen vorgesehen, die so einen ungehinderten Zugang in den Triebwagen 10 gewährleisten. Um die aus den Seitenwandsäulen 30 übertragenen Kräfte aufnehmen und abtragen zu können, sind die Türsäulen 32 im gezeigten Beispiel von parallel zueinander angeordneten Doppelprofilen gebildet, die aus Versteifungsgründen mittels Schrägstreben verstärkt sind. Die in den Kopfstücken 36 des Wagenkastens 22 vorgesehenen abweichende Gestaltung der Anordnung der Seitenwandsäulen 30 beruht auf den im Übergangsbereich von dem Niederflurbereich 12 zu den Kopfstücken 36 sich überlappenden Beanspruchungen.

In Fig. 3 ist ein ausschnittsweiser Querschnitt durch den erfindungsgemäßen Triebwagen 10 gezeigt mit einer Seitenwandsäule 30, einem hieran oberhalb anschließenden Längsgurt 28 sowie mit einem horizontal angeordneten Verbindungsstab 29, der zu dem auf der gegenüberliegenden, hier nicht näher gezeigten oberen Längsgurt 28 führt.

An der Seitenwandsäule 30 ist außen eine Seitenverkleidung 31 angebracht, die mittels Klebeverbindung an der Seitenwandsäule 30 hält. Oberhalb des Längsgurtes 28 und des Verbindungsstabes 29 ist ein Dachformteil 33 angeordnet, das ebenfalls wie auch das Seitenwandelement 31 in Verbund- oder Sandwich-Bauweise gefertigt ist und ein konvex-konkaves Querschnittsprofil besitzt.

Die verwendeten Sandwichplatten für die Seitenwandelemente besitzen einen Kunststoffkern, vorzugsweise aus Divinycel H30 oder H45 mit einer Dicke von etwa 20 mm beziehungsweise 15 mm, der mit einer Deckschicht aus gewebeverstärktem Faser-Kunststoff-Verbundmaterial, zum Beispiel GC-FGK2, oder aus laminiert ausgehärteten Fasermatten versehen sind. Die Sanwichelemente sind vorzugsweise unter Vakuum verpreßt in Folientechnik ausgebildet.

In Fig. 4 ist der untere Bereich desselben Querschnittes, wie er in Fig. 3 ausschnittsweise gezeigt wurde, dargestellt, wobei auch hier das Seitenwandelement 31 sowie die Seitenwandsäule 30 miteinander verbunden sind. Die Seienwandsäule 30 schließt an den Langträger 26 an, der seinerseits mit dem aus Wellbech und Querträgern gebildeten Wagenkastenboden 24 verbunden ist.

Die Innenverkleidung ist jeweils von einer Abdeckung gebildet, die von innen gegen das Fachwerk angelegt und vorzugsweise formschlüssig daran gehalten ist, z. B. mittels entsprechender Profile, in welche die Abdeckplatten mit dem oberen bzw. unteren Rand eingeführt sind. Statt dessen oder zusätzlich kann auch eine Klebeverbindung zwischen den Fachwerkträgern und den Abdeckungen vorgesehen sein.

## Patentansprüche

1. Schienengebundener Triebwagen (10) für die Personenbeförderung mit wenigstens einem Wagenkasten (22) mit gegenseitig mittels Verbindungsträgern zwischen oberen Längsgurten (28) abgestützten Seitenwänden (34) in Fachwerkbauweise und mit Einstiegsbereichen (16, 18), dessen Seitenwände (34) mit Fenstern versehen sind und dessen Einstiegsbereiche (16, 18) Türen aufweisen, wobei an einem Wagenkastenboden (24) die Seitenwände (34) anschließen, die aus Seitenwandsäulen (30), unteren Langträgern (26) sowie den oberen Längsgurten (28) gebildet sind, dadurch gekennzeichnet, daß der Wagenkasten (22) derart trogartig mit dem Wagenkastenboden (24) ausgebildet ist, daß er einen tiefliegenden Niederflurbereich (12) mit beidendig anschließenden Kopfstücken (36) aufweist, welche gegenüber dem Niederflurbereich (12) erhöht sind.

2. Triebwagen nach Anspruch 1, dadurch gekennzeichnet, daß der Wagenkastenboden (24) von einem Wellblechboden mit Querträgern gebildet ist, der die Kräfte aus der Nutzlast aufnimmt und in die Seitenwände (34) und in die unteren Langträger (26) ableitet und daß die Seitenwandsäulen (30) als Tragelemente für daran befestigte Fenster und Seitenverkleidungselemente dienen, welche Seitenwandsäulen (30) zickzackartig angeordnet und mit den unteren Langträgern (26) und den oberen Längsgurten (28) biegesteif verbunden sind.

3. Triebwagen nach Anspruch 1 oder 2, dadurch gekennzeichnet, daß die Seitenwandsäulen (30) unter einem Winkel von 60° ± 10° an ihren Enden zueinander schräggestellt sind.

4. Triebwagen nach einem der vorherigen Ansprüche, dadurch gekennzeichnet, daß der Niederflurbereich (12) wenigstens 60 % der Nutzfläche des Wagenkastens (22) umfaßt.

5. Triebwagen nach einem der vorherigen Ansprüche, dadurch gekennzeichnet, daß jeweils von der Langträgerunterkante bis zu der Fensterunterkante sowie von der Fensteroberkante bis zu den oberen Längsgurten (28) auf der Innenseite angeordnete Seitenverkleidungselemente (31) angesetzt sind.

6. Triebwagen nach Anspruch 5, dadurch gekennzeichnet, daß Brüstungsgurte als horizontale Anlage für die Fenster und die Seitenverkleidungselemente vorgesehen sind.

7. Triebwagen nach Anspruch 6, dadurch gekennzeichnet, daß die Brüstungsgurte mittels Schraub- und/oder Klemmverbindung mit den Seitenwandsäulen (30) verbunden sind und nicht an der Übertragung von Kräften aus dem Fachwerk beteiligt sind.

8. Triebwagen nach Anspruch 6 oder 7, dadurch gekennzeichnet, daß die Brüstungsgurte jeweils in Höhe der Fensterunterkante und der Fensteroberkante angeordnet sind.

9. Triebwagen nach einem der Ansprüche 2 bis 8, dadurch gekennzeichnet, daß die Seitenverkleidungselemente (31) und die Fenster bündig aneinanderstoßen.

10. Triebwagen nach einem der vorherigen Ansprüche, dadurch gekennzeichnet, daß lediglich im Einstiegsbereich (16, 18) senkrechte Türsäulen (32) vorgesehen sind, welche ebenfalls mit den unteren Längsträgern (26) und den oberen Längsgurten (28) biegesteif verbunden sind und jeweils eine von Türen verschließbare Einstiegsöffnung (16, 18) einfassen.

11. Triebwagen nach einem der vorherigen Ansprüche, dadurch gekennzeichnet, daß die zur Kraftübertragung dienenden Teile des Wagenkastens (22) aus Stahlvierkantrohren und Stahlblechabkantprofilen gefertigt sind.

12. Triebwagen nach einem der vorherigen Ansprüche, dadurch gekennzeichnet, daß für die außen angeordnete Seitenverkleidung (31) Wandplatten in Sandwich-Bauweise vorgesehen sind.

13. Triebwagen nach einem der vorherigen Ansprüche, dadurch gekennzeichnet, daß die Wandplatten für die Außenseitenverkleidung einen zwischen zwei Holzplatten eingesetzten Kunststoffkern aufweisen, und daß auf deren Außenseite ein Leichtmetallblech und auf deren Innenseite ein Belag aus Kunststoff angeordnet sind.

14. Triebwagen nach einem der vorherigen Ansprüche, dadurch gekennzeichnet, daß die Fenster durchgehend von Einstiegsbereich (16, 18) zu Einstiegsbereich (16, 18) vorgesehen sind und jeweils außen an den Seitenwandsäulen (30) anliegen.

15. Triebwagen nach einem der vorherigen Ansprüche, dadurch gekennzeichnet, daß die Fenster und die innenliegenden Seitenverkleidungselemente (31) an den Seitenwandsäulen (30), an den Brüstungsgurten sowie den Türsäulen (32) mittels Klebeverbindung befestigt sind.

16. Triebwagen nach einem der vorherigen Ansprüche, dadurch gekennzeichnet, daß die Seitenwandsäulen (30) mit den unteren Langträgern (26) und/oder den oberen Längsgurten (28) verschraubt sind.

17. Triebwagen nach einem der Ansprüche 1 bis 15, dadurch gekennzeichnet, daß die Seitenwandsäulen (30) mit den unteren Langträgern (26) und/oder den oberen Längsgurten (28) verschweißt sind.

18. Triebwagen nach einem der Ansprüche 1 bis 15, dadurch gekennzeichnet, daß die Seitenwandsäulen (30) mit den unteren Langträgern (26) und/oder den oberen Längsgurten (28) verklebt sind.

19. Triebwagen nach einem der Ansprüche 1 bis 15, dadurch gekennzeichnet, daß die Seitenwandsäulen (30) mit den unteren Langträgern (26) und/oder den oberen Längsgurten (28) vernietet sind.

20. Triebwagen nach einem der vorherigen Ansprüche, dadurch gekennzeichnet, daß das Dach des Triebwagens (10) aus Formteilen gebildet ist.

21. Triebwagen nach Anspruch 21, dadurch gekennzeichnet, daß die Formteile für das Wagendach in Sandwich-Bauweise gefertigt sind.

22. Triebwagen nach einem der vorherigen Ansprüche, dadurch gekennzeichnet, daß sämtliche Stoßfugen an den Seitenwandelementen, an den Fenstern sowie an den Dachformteilen mit Dichtmaterial versiegelt sind.

23. Triebwagen nach einem der Ansprüche 10 bis 22, dadurch gekennzeichnet, daß für die Türsäulen (32) verstärkte Profile vorgesehen sind, die jeweils beiderseits jeder Einstiegsöffnung (16, 18) angeordnet sind.

24. Triebwagen nach einem der Ansprüche 10 bis 22, dadurch gekennzeichnet, daß für die Türsäulen (32) das gleiche Profil wie für die Seitenwandsäulen (30) vorgesehen ist und daß jeweils zwei parallel zueinander angeordnete Türsäulen (32) auf jeder Seite einer Einstiegsöffnung (16, 18) angeordnet sind, die mittels Schrägstäben miteinander verbunden und versteift sind.

## Claims

1. A track-bound power car (10) for passenger conveyance, with at lest one coach body (22) with, mutually braced by connecting members between upper longitudinal members (28), side walls (34) of lattice-type construction and with boarding areas (16, 18), of which the side walls (34) have windows while the boarding areas (16, 18) have doors, whereby, adjacent to a coach floor (24), there are the side walls (34) which consist of side wall pillars (30), bottom longitudinal members (26) and the upper longitudinal members (28), characterised in that the coach body (22) is of such trough-like construction with the vehicle floor (24) that it has a low-lying low floor areas (12) with head parts (34) at both ends which are higher than the low floor area (12).

2. A power car according to claim 1, characterised in that the coach floor (24) consists of a corrugated plate floor with cross-members, which accommodates the forces from the payload and disperses them into the side walls (34) and into the bottom longitudinal members (26) and in that the side wall pillars (30) serve as elements which support the windows and lateral cladding elements fixed thereon, the said side wall pillars (30) being disposed in a zig-zag formation and being flexurally rigidly connected to the bottom longitudinal members (26) and the upper longitudinal members (28).

3. A power car according to claim 1 or 2, characterised in that the side wall pillars (30) are at their ends inclined at an angle of 600°± 10° in respect of one another.

4. A power car according to one of the preceding claims, characterised in that the low floor area (12) comprises at least 60% of the useful area of the coach body (22).

5. A power car according to one of the preceding claims, characterised in that lateral cladding elements (31) disposed on the inside extend from the bottom edge of the longitudinal members up to the bottom edge of the windows and from the top edge of the windows as far as the upper longitudinal members (28).

6. A power car according to claim 5, characterised in that breastwork members are provided as a horizontal support for the windows and the lateral cladding elements.

7. A power car according to claim 6, characterised in that the breastwork members are connected to the side wall pillars (30) by means of screwed and/or clamped joints and do not participate in the transmission of forces emanating from the structure.

8. A power car according to claim 6 or 7, characterised in that the breastwork members are in each case disposed at the height of the bottom edge of the window and the top edge of the window.

9. A power car according to one of claims 2 to 8, characterised in that the lateral cladding elements (31) and the windows are in flush abutment.

10. A power car according to one of the preceding claims, characterised in that vertical door pillars (32) are only provided in the boarding area (16, 18) and are similarly connected in flexurally rigid manner to the bottom longitudinal members (26) and the upper longitudinal members (28) and in each case surround an access opening (16, 18) which is adapted to be closed by means of doors.

11. A power car according to one of the preceding claims, characterised in that the parts of the coach body (22) which serve to transmit forces are made of square section steel tubes and bent-over steel plate sections.

12. A power car according to one of the preceding claims, characterised in that wall panels of sandwich construction are provided for the outer lateral cladding (31).

13. A power car according to one of the preceding claims, characterised in that the wall panels for the outside cladding comprise a plastics core inserted between two wood panels and in that there is a light metal plate on their outside surface and a synthetic plastics lining on their inside.

14. A power car according to one of the preceding claims, characterised in that the windows are continuous from boarding zone (1 , 18) to boarding zone (16, 18) and are in each case adjacent to the side wall pillars (30).

15. A power car according to one of the preceding claims, characterised in that the windows and the inner lateral cladding elements (31) are fixed to the side wall pillars (30), to the breastwork members and to the door pillars (32) by an adhesive joint.

16. A power car according to one of the preceding claims, characterised in that the side wall pillars (30) are screwed to the bottom longitudinal members (26) and/or the upper longitudinal members (28).

17. A power car according to one of claims 1 to 15, characterised in that the side wall pillars (30) are welded to the bottom longitudinal members (26) and/or the upper longitudinal members (28).

18. A power car according to one of claims 1 to 15, characterised in that the side wall pillars (30) are glued to the bottom longitudinal members (26) and/or the upper longitudinal members (28).

19. A power car according to one of the preceding claims, characterised in that the roof of the power car (10) consists of shaped parts

20. A power car according to one of claims 1 to 15, characterised in that the side wall pillars (30) are riveted to the bottom longitudinal members (26) and/or the upper longitudinal members (28).

21. A power car according to claim 21, characterised in that the shaped parts for the coach roof are of sandwich construction.

22. A power car according to one of the preceding claims, characterised in that all joints on the side wall elements, on the windows and on the shaped roof parts are sealed with a sealing material.

23. A power car according to one of claims 10 to 22, characterised in that reinforced sections are provided for the door pillars (32) and are in each case disposed on both sides of each boarding aperture (16, 18).

24. A power car according to one of claims 10 to 22, characterised in that for the door pillars (32), the same profile section is used as for the side wall pillars (30) and in that in each case two parallel door pillars (32) are disposed on each side of a boarding aperture (16, 18) and are connected to one another and rigidified by means of oblique bars.

## Revendications

1. Automotrice roulant sur rails (10) pour le transport de personnes comprenant au moins une superstructure (22) comportant des parois latérales (34) s'appuyant réciproquement à l'aide de supports de liaison entre des traverses longitudinales supérieures (28) dans un mode de construction en treillis et des zones d'accès (16, 18), dont les parois latérales (34) sont munies de fenêtres et dont les zones d'accès (16, 18) présentent des portes, dans laquelle les parois latérales (34) qui se raccordent à un plancher de superstructure (24) sont formées par des montants de parois latérales (30), par des supports longitudinaux inférieurs (26) et par les traverses longitudinales supérieures (28), caractérisée en ce que la superstructure (22) est réalisée en forme d'auge avec le plancher de la superstructure (24) de telle sorte qu'elle présente une plate-forme surbaissée (12) et comprenant des traverses de tête (36) qui s'y raccordent aux deux extrémités et qui sont surélevées par rapport à la plate-forme surbaissée (12).

2. Automotrice selon la revendication 1, caractérisée en ce que le plancher de superstructure (24) est formé à l'aide d'un plancher en tôle ondulée comportant des supports transversaux, qui absorbe les forces provenant de la charge utile et qui les dévie dans les parois latérales (34), ainsi que dans les supports longitudinaux inférieurs (26), et en ce que les montants de parois latérales (30) servent d'éléments de support pour des fenêtres et pour des éléments de revêtements latéraux qui y sont fixés, lesdits montants de parois latérales (30) étant disposés en zigzag et étant reliés d'une manière résistant à la flexion avec les supports longitudinaux inférieurs (26) et avec les traverses longitudinales supérieures (28).

3. Automotrice selon la revendication 1 ou 2, caractérisée en ce que les montants de parois latérales (30) sont disposés en inclinaison les uns par rapport aux autres en formant un angle de 60° +/- 10° à leurs extrémités.

4. Automotrice selon l'une quelconque des revendications précédentes, caractérisée en ce que la plate-forme surbaissée (12) comprend au moins 60 % de la surface utile de la superstructure (22).

5. Automotrice selon l'une quelconque des revendications précédentes, caractérisée en ce que respectivement depuis l'arête inférieure des supports longitudinaux jusqu'à l'arête inférieure des fenêtres et depuis l'arête supérieure des fenêtres jusqu'aux traverses longitudinales supérieures (28), sont posés des éléments de revêtements latéraux (31) disposés sur le côté interne.

6. Automotrice selon la revendication 5, caractérisée en ce qu'on prévoit des traverses de garde-corps à titre d'appui horizontal pour les fenêtres et pour les éléments de revêtements latéraux.

7. Automotrice selon la revendication 6, caractérisée en ce que les traverses de garde-corps sont reliées aux montants de parois latérales (30) à l'aide de raccords à vis et/ou par serrage et n'interviennent pas dans le transfert des forces exercées par le treillis.

8. Automotrice selon la revendication 6 ou 7, caractérisée en ce que les traverses de garde-corps sont disposées respectivement à hauteur de l'arête inférieure des fenêtres et de l'arête supérieure des fenêtres.

9. Automotrice selon l'une quelconque des revendications 2 à 8, caractérisée en ce que les éléments de revêtements latéraux (31) et les fenêtres sont disposées de manière contiguë à fleur.

10. Automotrice selon l'une quelconque des revendications précédentes, caractérisée en ce qu'on prévoit des montants de portes verticaux (32) uniquement dans la zone d'accès (16, 18) qui sont également reliés de manière résistante à la flexion avec les supports longitudinaux inférieurs (26) et avec les traverses longitudinales supérieures (28) et qui comprennent respectivement une ouverture d'accès (16, 18) qui peut être fermée avec des portes.

11. Automotrice selon l'une quelconque des revendications précédentes, caractérisée en ce que les parties de la superstructure (22) servant à transférer les forces sont réalisées à l'aide de tubes carrés en acier et de profilés chanfreinés en tôle.

12. Automotrice selon l'une quelconque des revendications précédentes, caractérisée en ce qu'on prévoit, pour le revêtement latéral (31) disposé à l'extérieur, des panneaux de parois de type sandwich.

13. Automotrice selon l'une quelconque des revendications précédentes, caractérisée en ce que les panneaux de parois pour le revêtement du côté externe présentent une partie centrale en matière synthétique insérée entre deux panneaux de bois, et en ce qu'une tôle de métal léger est disposée sur le côté externe des premiers cités, une couche de matière synthétique étant disposée sur leur côté interne.

14. Automotrice selon l'une quelconque des revendications précédentes, caractérisée en ce que les fenêtres sont prévues sans interruption depuis la zone d'accès (16, 18) jusqu'à la zone d'accès (16, 18) et se raccordent respectivement à l'extérieur aux montants de parois latérales (30).

15. Automotrice selon l'une quelconque des revendications précédentes, caractérisée en ce que les fenêtres et les éléments de revêtements latéraux internes (31) sont fixés aux montants de parois latérales (30), aux traverses de garde-corps et aux montants de portes (32) à l'aide d'un joint collé.

16. Automotrice selon l'une quelconque des revendications précédentes, caractérisée en ce que les montants de parois latérales (30) sont vissés aux supports longitudinaux inférieurs (26) et/ou aux traverses longitudinales supérieures (28).

17. Automotrice selon l'une quelconque des revendications 1 à 15, caractérisée en ce que les montants de parois latérales (30) sont soudés aux supports longitudinaux inférieurs (26) et/ou aux traverses longitudinales supérieures (28).

18. Automotrice selon l'une quelconque des revendications 1 à 15, caractérisée en ce que les montants de parois latérales (30) sont collés aux supports longitudinaux inférieurs (26) et/ou aux traverses longitudinales supérieures (28).

19. Automotrice selon l'une quelconque des revendications 1 à 15, caractérisée en ce que les montants de parois latérales (30) sont rivetés aux supports longitudinaux inférieurs (26) et/ou aux traverses longitudinales supérieures (28).

20. Automotrice selon l'une quelconque des revendications précédentes, caractérisée en ce que le toit de l'automotrice (10) est formé à l'aide d'éléments moulés.

21. Automotrice selon la revendication 20, caractérisée en ce que les éléments moulés pour le toit du véhicule sont réalisés sous la forme d'une structure en sandwich.

22. Automotrice selon l'une quelconque des revendications précédentes, caractérisée en ce que l'ensemble des joints sur les éléments de paroi latérale, sur les fenêtres, ainsi que sur les éléments moulés du toit sont soumis à un thermosoudage avec une matière d'étanchéisation.

23. Automotrice selon l'une quelconque des revendications 10 à 22, caractérisée en ce qu'on prévoit, pour les montants de portes (32), des profilés renforcés qui sont disposés respectivement de part et d'autre de chaque ouverture d'accès (16, 18).

24. Automotrice selon l'une quelconque des revendications 10 à 22, caractérisée en ce qu'on prévoit, pour les montants de portes (32), le même profilé que celui prévu pour les montants de parois latérales (30) et en ce que respectivement deux montants de portes (32) disposés parallèlement l'un à l'autre sont disposés de part et d'autre d'une ouverture d'accès (16, 18), lesdits montants étant reliés les uns aux autres et étant renforcés à l'aide de barres obliques.
